# EUROPEAN PATENT SPECIFICATION

(11) **EP 1 659 657 B1**
(45) Date of publication and mention of the grant of the patent: **29.09.2010**
(21) Application number: 05025260.0
(22) Date of filing: 18.11.2005
(51) Int. Cl.: H01Q 1/24, H04M 1/02

(54) **Mobile wireless device with built-in antenna**
Drahtloses Mobilgerät mit eingebauter Antenne
Dispositif portable sans-fil avec antenne intégrée

(30) Priority: 18.11.2004 JP 2004334603; 21.07.2005 JP 2005211695; 09.11.2005 JP 2005325218
(43) Date of publication of application: 24.05.2006
(73) Proprietor: NEC CASIO Mobile Communications, Ltd., Kawasaki-shi Kanagawa 211-8666 (JP)
(72) Inventor: Miyagawa, Tatsuya, Casio Hitachi Mobile, Higashiyamato-shi Tokyo 207-8501 (JP); Kaneoya, Masanori, Casio Hitachi Mobile, Higashiyamato-shi Tokyo 207-8501 (JP)
(74) Representative: Grünecker, Kinkeldey, Stockmair & Schwanhäusser Anwaltssozietät

(56) References cited:
- EP-A- 0 590 671
- EP-A- 1 098 388
- EP-A- 1 388 910
- WO-A-02/35810
- PATENT ABSTRACTS OF JAPAN vol. 2003, no. 09, 3 September 2003 (2003-09-03) & JP 2003 158415 A (NTN CORP), 30 May 2003 (2003-05-30)

## Description

### CROSS-REFERENCE TO RELATED APPLICATION

This application is based upon and claims the benefit of priority from the prior Japanese Patent Application No. 2004-334603 filed November 18, 2004, Japanese Patent Application No. 2005-211695 filed July 21, 2005 and Japanese Patent Application No. 2005-325218 filed November 9, 2005.

### BACKGROUND OF THE INVENTION

### 1. Field of the Invention

The present invention relates to a mobile wireless device, in particular to a mobile wireless device having a built-in antenna.

### 2. Description of the Related Art

As a mobile wireless device, mobile phones are widely used. Some of them have a built-in antenna (reference is made, for example, to Japanese Laid-Open Patent Publication No.2006-104411).

The casing of the housing, particularly the front casing having holes for the operating buttons of some mobile phones, is made of metal such as a magnesium alloy which is lightweight and having high specific strength for providing the housing with improved impact resistance (reference is made, for example, to Japanese Laid-Open Patent Publication No. 2003-094686 (WO International Publication No.01/58116 A1). The mobile phone described in Japanese Laid-Open Patent Publication No. 2003-094686 is provided with circuit module reinforcement and an electromagnetic shielding member, also made of metal such as magnesium alloy.

However, when a built-in antenna is provided in the housing, the antenna is usually mounted on a circuit board. When a metal front casing of housing, a metal circuit module reinforcement member or an electromagnetic shielding member is used, there are problems in that the metal provided near the antenna deteriorates the transmission and reception properties of the antenna.

Prior art document JP-2003-158415-A discloses a mobile wireless device with a resin housing made of a general part which holds both a circuit board and an antenna disposed behind each other. However, the problem of using metal parts for shielding or reinforcement of the circuit board is not addressed.

Prior art document EP-A-1 388 910 discloses a mobile phone with a circuit board housed in a recess of the main housing. The antenna is either completely contained in a separate dielectric member resembling a U-shaped rod antenna, or the antenna partially extends into the main housing without being separated from the circuit board. Said separate dielectric member primarily provides a means for suspending the apparatus on a user, for example a patient to be monitored, in a comfortable and well-balanced manger.

### SUMMARY OF THE INVENTION

The present invention is proposed to resolve the above problem and is provided with the object of providing a mobile wireless device that maintains the transmission and/or reception properties of the built-in antenna in an excellent state, even if any of the front casing of housing, circuit module reinforcement member, and circuit module electromagnetic shielding member is made of metal.

In order to achieve the above object, the present invention provides a mobile wireless device having a built-in antenna in the housing, comprising the features as claimed in claim 1.

The present invention ensures that the transmission and/or reception properties of the antenna are well maintained even if the second casing is a metal casing or if the circuit board is provided with a metal reinforcement member or a metal electromagnetic shielding member.

When the second casing is a metal casing, the housing is provided with improved strength, protecting the housed circuit board against impact and shock in addition to the above effect.

The above and further objects and novel features of the present invention will more fully appear from the following detailed description when the same is read in conjunction with the accompanying drawings. Itisto be expressly understood,however, that the drawings are for the purpose of illustration only and are not intended as a definition of the limits of the invention.

### BRIEF DESCRIPTION OF THE DRAWINGS

FIGS. 1A to 1C show the structure of a mobile phone in an embodiment of the mobile wireless device to which the present invention is applied. FIG.1A is a side view of the mobile phone 1, FIG.1B is a front view of the mobile phone 1 and FIG.1C is a rear view of the mobile phone 1;
FIG.2 is a disassembled perspective view of the mobile phone 1 seen from the front with the lower housing 3 being disassembled;
FIG. 3 is a disassembled perspective view of the lower housing 3 seen from the back with the lower housing 3 being disassembled;
FIG. 4 is a cross-sectional view along the line IV-IV in FIG. 1;
FIG.5 is a perspective view showing the structure of a folding-type mobile phone as second embodiment of the mobile wireless device to which the present invention is applied when seen from the front;
FIG. 6 is a disassembled perspective view of the folding-type mobile phone of FIG.5 in the closed state seen from the back with the battery pack removed;
FIG.7 is a perspective view of the opened mobile phone of FIG.5 with the front casing, hinge cap, hinge cover and internal modules of the lower housing removed;
FIG.8 is a perspective view of the closed mobile phone of FIG.6 with the battery pack, back casing and hinge caps of the lower housing removed in order to explain the structure of the antenna;
FIG. 9 is a cross-sectional·view of the hinge corresponding to the area covered with the hinge cover integrally formed with the key top plate of FIG.5;
FIG. 10 is a cross-sectional view of the hinge corresponding to the area covered with the hinge cover integrally formed with the logo plate of FIG.5; and
FIGS. 11A and 11B are illustrations showing the antenna connection conductor. FIG.11A is a perspective view seen from the same direction as FIG.7. FIG.11B is a perspective view seen from the same direction as FIG.8.

### DETAILED DESCRIPTION OF THE PREFERRED EMBODIMENTS

Preferred embodiments of the present invention are described hereafter with reference to the drawings. Embodiments described below include various technically preferable restrictions to implementing the present invention. However, the scope of the present invention is not restricted to the embodiments and illustrations discussed below.

### A. First Embodiment

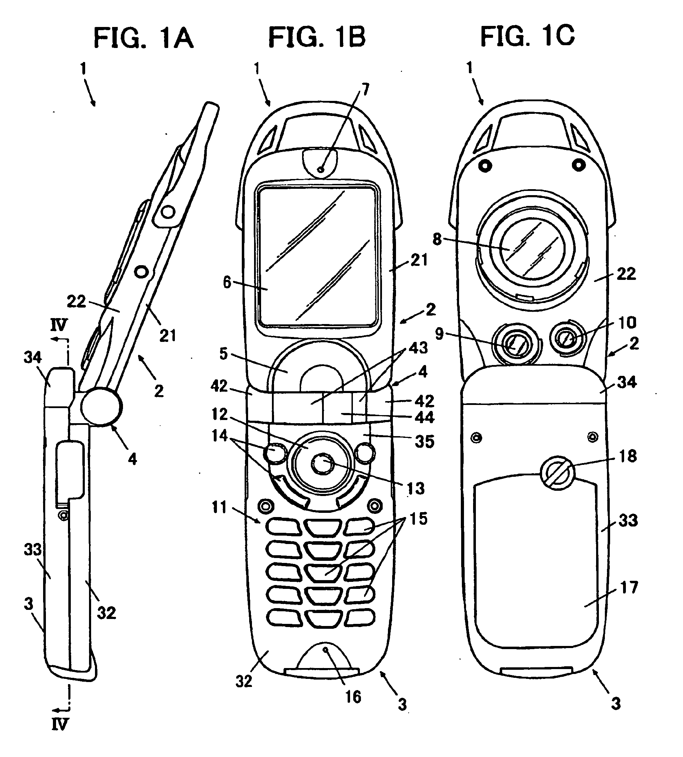

FIGS. 1A to 1C show three sides of a mobile phone 1 in an embodiment of the mobile wireless device to which the present invention is applied. FIG.1A is a side view, FIG.1B is a front view and FIG.1C is a rear view.

The mobile phone 1 of this embodiment is of a folding-type provided with an upper housing 2 pivotally coupled to a lower housing 3 via a hinge 4 which allows the upper and lower housings 2 and 3 to be opened/closed.

The upper housing 2 comprises a front casing 21 and a back casing 22. Of the front and back faces of the upper housing 2, the front face which goes inside when folded (i.e. the front casing 21 side) is provided with a main display 6 consisting of a liquid crystal display panel or an electro-luminescence display panel. A telephone speaker 7 is provided in the upper housing 2 further away from the hinge 4 than the main display 6.

In the upper housing 2, the back face opposite the front face provided with the main display 6 (i.e. the back casing 22 side) is provided with a sub-display 8 consisting of a liquid crystal display panel or an electro-luminescence display panel. An imaging lens 9 is provided near the sub-display 8. A solid-state imaging element such as a CCD (charge-coupled device) type or CMOS (complementary metal oxide semiconductor) type is provided in the upper housing 2 at a point on the optical axis of the imaging lens 9 where an image of an object is formed on the solid-state imaging element by the imaging lens 9. A flash light 10 consisting of a light emitting element such as an LED (light emitting diode) is provided near the imaging lens 9 and is turned on at the time of imaging.

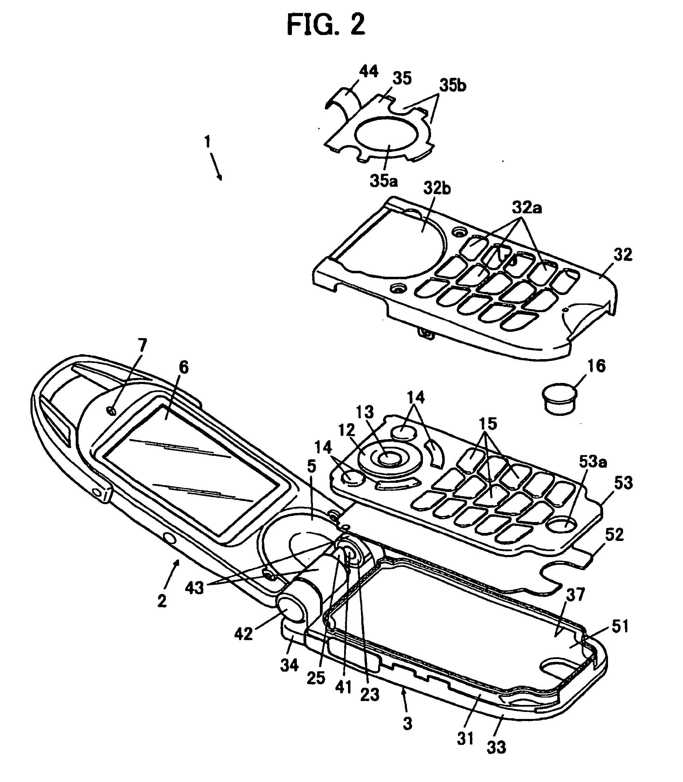

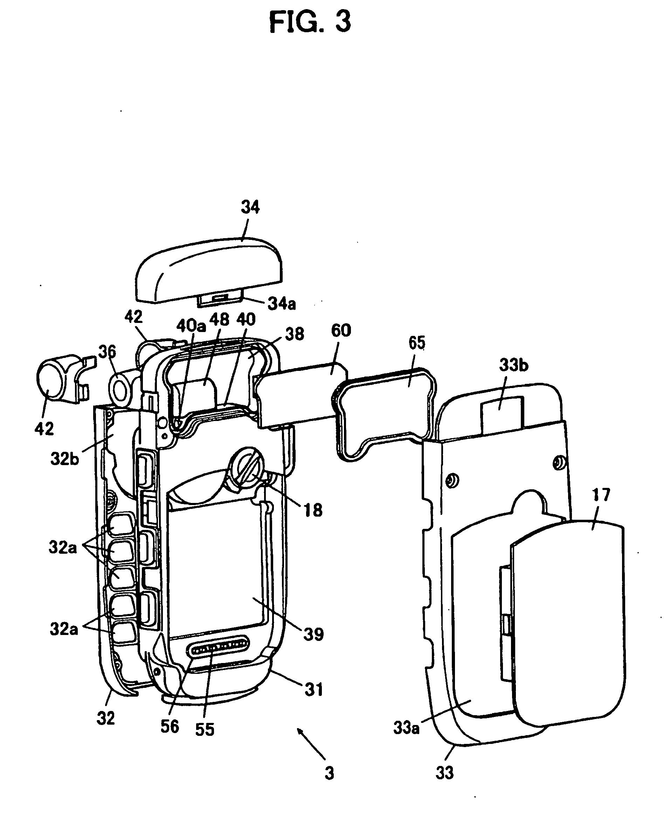

The lower housing 3 comprises a middle casing 31 having the main casing constituting the framework of the lower housing 3 (Refer to FIGS. 2 and 3) , a front casing (front cover) 32 which covers the front face of the middle casing 31, a back casing (back cover) 33 which covers the back face of the middle casing 31, a protective cover 34 which partially covers the middle casing 31 and back casing 33 near the hinge 4, and a key top plate 35 which constitutes a part of the front casing 32.

Of the faces of the lower housing 3, the front face which goes inside when folded (i. e. the front casing 32 side) is provided with an operation part 11. The operation part 11 comprises a direction indicator button 12 for cursor control and screen scrolling, an enter button 13 in the center of the direction indicator button 12, four function buttons 14 around the direction indicator button 12, and 15 character/number input buttons 15 below the direction indicator button 12. In addition, a telephone microphone 16 is provided in the lower housing 3 further away from the hinge 4 than the operation part 11.

A rechargeable battery pack 17 is detachably provided in the lower housing 3 on the back face opposite the front face holding the operation part 11 (i.e. the back casing 33 side) in which a lock mechanism 18 which locks the rechargeable battery pack 17 in the lower housing 3 is also provided.

The internal structure of the lower housing 3 is described in detail hereafter with reference to FIGS. 2 and 3. FIG.2 is a disassembled perspective view of the lower housing 3 seen from the front. FIG. 3 is a disassembled perspective view of the lower housing 3 seen from the back.

The middle casing 31 is a main casing constituting the framework of the lower housing 3. Brackets 36 (Refer to FIG. 3) which support hinge units 41 are arranged in the form of protruding on the front face of the middle casing 31 at the coupling end to the upper housing 2.

The hinge 4 is formed by pivotally coupling a pair of brackets 36, 36 (Refer to FIG.3) provided on the right and left ends of the front face of the middle casing 31 with a pair of right and left brackets 23, 23 (Refer to FIG.2) provided on the upper housing 2 (for example, on the back casing 22 of the upper housing 2) located within the brackets 36, 36 via the hinge units 41, 41.

The hinge 4 is covered with hinge caps 42 and hinge covers 43 and 44. Specifically, the hinge caps 42, 42 cover the outer brackets 36, 36 on the middle casing 31. The hinge cover 43 covers the inner brackets 23, 23 on the upper housing 2 and a half of the space between the brackets 23, 23. Additionally, the hinge cover 44 covers the remaining half of the space.

In this embodiment, the hinge cover 43 is integrally formed with a logo plate 5 which is attached to the front casing 21 of the upper housing 2 and the hinge cover 44 is integrally formed with the key top plate 35 which constitutes a part of the front casing 32 of the lower housing 3. The space covered with the hinge covers 43 and 44 is used to pass an FPC (flexible printed circuit) 25 which connects circuits in the upper and lower bodies 2 and 3.

As shown in FIG.2, the front face of the middle casing 31 is recessed as a board housing recess 37 except for the area in which the hinge 4 is provided.

A circuit board 51 carrying wireless and control circuits is housed in the board housing recess 37. Un-shown fixed contact points are provided on the top surface of the circuit board 51 in positions corresponding to the direction indicator button 12, enter button 13, function buttons 14 and character/number input buttons 15.

A sheet key 52 is overlapped on the circuit board 51. Movable contact points are provided on the bottom surface of the sheet key 52 at positions corresponding to the direction indicator button 12, enter button 13, function buttons 14 and character/number input buttons 15.

A keypad 53 is placed onto the sheet key 52. The keypad 53 is made of an elastic rubber sheet, on the top surface of which are a protruding direction indicator button 12, an enter button 13, function buttons 14 and character/number input buttons 15. The keypad 53 also serves as watertight packing to prevent water from entering the board housing recess 37. The board housing recess 37 is covered and sealed with the keypad 53, which is provided with a hole 53a in which the waterproof telephone microphone 16 ispress fitted and by which the telephone microphone 16 is liquid-tightly held.

The board housing recess 37 is covered with a front casing 32 housing the circuit board 51, sheet key 52 and keypad 53. The front casing 32 covers the middle casing 31 over the front face and sidewalls except for the area in which the hinge 4 is provided. The edge of the keypad 53 also serves as watertight packing and is inserted between the front casing 32 and middle casing 31 along the edge of the board housing recess 37.

The front casing 32 is provided with multiple holes 32a corresponding to the character/number input buttons 15 which protrude through the holes 32a. The front casing 32 also is provided with a semicircle hole 32b for the key top plate 35 in the area where the direction indicator button 12, enter button 13 and function buttons 14 are provided. The key top plate 35 is provided with a hole 35a corresponding to the direction indicator button 12 in the center and notches 35b corresponding to the function buttons 14 along the circumference. Hence, when the key top plate 35 is installed in the hole 32b of the front casing 32, the direction indicator button 12 and the enter button 13 protrude from the hole 35a formed in the key top plate 35 and function buttons 14 protrude from the notches 35b formed in the key top plate 35.

In this embodiment, the middle casing 31, back casing 33 and protective cover 34 are made of resin and the front casing 32 is made of metal, preferably a magnesium alloy. Using the magnesium alloy front casing 32 improves impact resistance and prevents the board circuit 51 and other components from being damaged due to impact.

As shown in FIG. 3, an antenna housing recess 38 and a battery housing recess 39 are formed during a state of recessing on the back face of the middle casing 31. The battery housing recess 39 is provided directly to the rear of the board housing recess 37. The antenna housing recess 38 is provided directly behind the hinge 4 by which the antenna housing recess 38 is positioned on the back face of the middle casing 31 in an area not directly behind the front casing 32 and board housing recess 37.

In FIG.3, the part 48 protruding from the hinge 4 into the antenna housing recess 38 is an extended space of the hinge 4 used to pass the FPC 25 from the hinge 4 to the board housing recess 37.

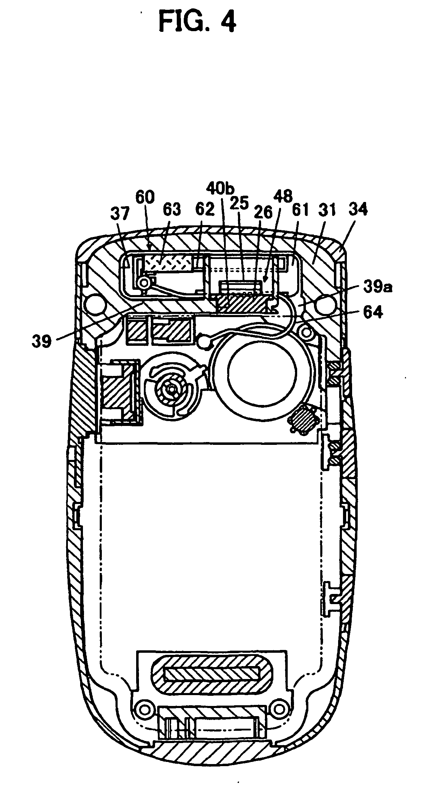

An antenna 60 is housed in the antenna housing recess 38. This antenna 60 is a printed-wiring board type antenna. As shown in FIG.4, the antenna 60 is constituted by a board 61, a printed antenna 62 patterned on the board 61 and a chip antenna 63 on the board 61. FIG.4 is a cross-sectional view along the line IV-IV in FIG.1.

In the middle casing 31, a partition 40 which compartmentalizes the antenna housing recess 38 and board housing recess 37 is provided with a through-hole 40a which connects the antenna housing recess 38 and board housing recess 37.

A wiring element 64 consisting of a wiring metal conductive element such as a coaxial cable and a plate is passed through the through-hole 40a to electrically connect the antenna 60 and circuit board 51.

The partition 40 also is provided with a hole 40b to pass the FPC 25 in the area where the hinged area 4 is extended by the protruding part 48. The hole 40b is closed by watertight packing 26 attached to the FPC 25.

As shown in FIG.3, watertight elastic rubber packing 65 is overlapped on the antenna 60 to cover and close the antenna housing recess 38. The antenna housing recess 38 is covered with the back casing 33 in the state of housing the antenna 60 by covering and closing by the watertight packing 65. The back casing 33 covers the middle casing 31 over the back face and sidewalls. The edge of the watertight packing 65 is clamped between the back and middle casings 33 and 31 along the edge of the antenna housing recess 38.

The back casing 33 is provided with an opening 33a in the area corresponding to the battery housing recess 39. The rechargeable battery pack 17 is housed in the battery housing recess 39 through the opening 33a. A power connection terminal 55 provided on the circuit board 51 is exposed at the bottom of the batteryhousing recess 3 9 and makes contact with the terminal of the rechargeable battery pack 17.

Watertight packing 56 is provided around the power connection terminal 55 to prevent water from entering the board housing recess 36 from the battery housing recess 39. The rechargeable battery pack 17 housed in the battery housing recess 39 is locked in the middle casing 31 by the lock mechanism 18.

The back casing 33 is covered with the protective cover 34 in the area corresponding to the antenna housing recess 38. The protective cover 34 covers the back casing 33 and the sidewall of the middle casing 31 and is provided with a latch 34a which passes through a hole 33b formed in the back casing 33 and is latched to a locking part formed on the inner surface of the back casing 33.

As described above, in this embodiment, the front casing 32 is made of metal. The board housing recess 37 housing the circuit board 51 and the antenna housing recess 38 housing the antenna 60 are separately formed in the resin middle casing 31. Furthermore, the antenna housing recess 38 is covered with the resin back casing 33 which is separate from the front casing 32 covering the board housing recess 37 and the resin protective cover 34. Therefore, the antenna is not affected by the metal used in the front casing 32 during transmission and reception of radio waves thereby realizes excellent communication.

On the other hand, since the front casing 32 which covers the board housing recess 37 is metal, especially a product made from a Magnesium alloy, its impact resistance improves.

Furthermore, since the edge of the keypad 53 also serving as watertight packing is inserted between the middle casing 31 and front casing 32 and the edge of the watertight packing 65 is inserted between the middle casing 31 and back casing 33, watertight properties improves.

### B. Second Embodiment

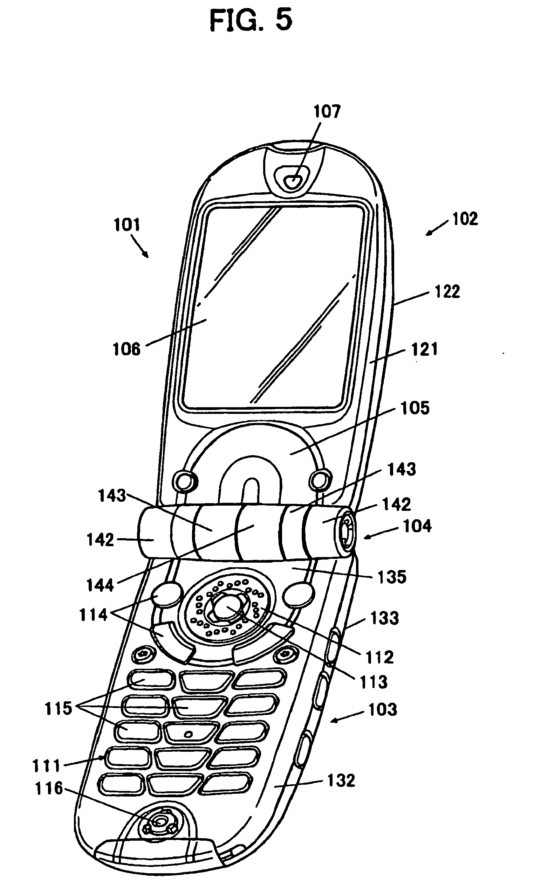

Embodiment 2 of the present invention is described hereafter with reference to FIGS. 5 to 11.

FIG.5 is a perspective view of a folding-type mobile phone 101 in an embodiment of the mobile wireless device of the present invention when opened and seen from the front. FIG. 5 shows an upper housing 102, a lower housing 103 and a hinge 104 where the upper and lower housings 102 and 103 are pivotally coupled via the hinge 104.

The upper housing 102 is formed by joining a front casing 121 and a back casing 122. The front face which meets the lower housing 103 in the folded state (i.e. the front casing 121 side) is provided with a display (liquid crystal display screen) 106, a telephone speaker 107 and a logo plate 105.

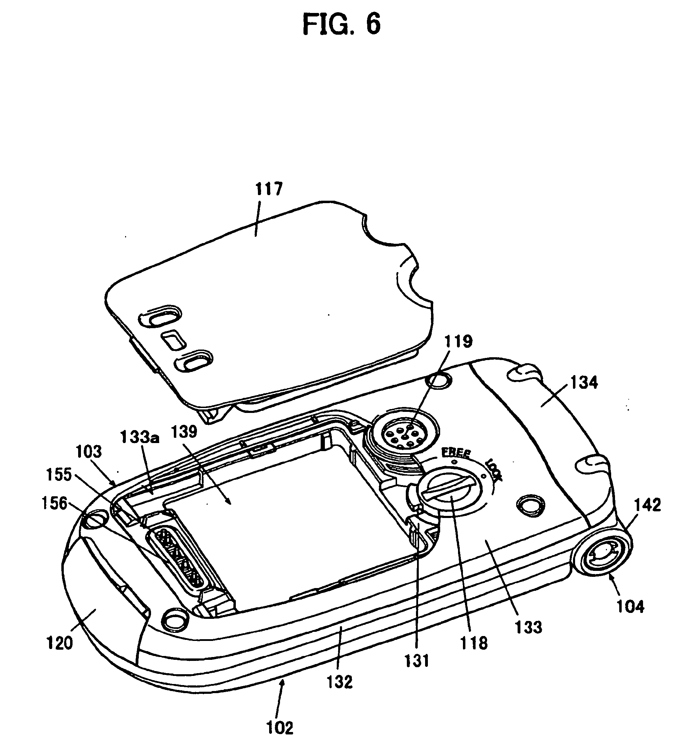

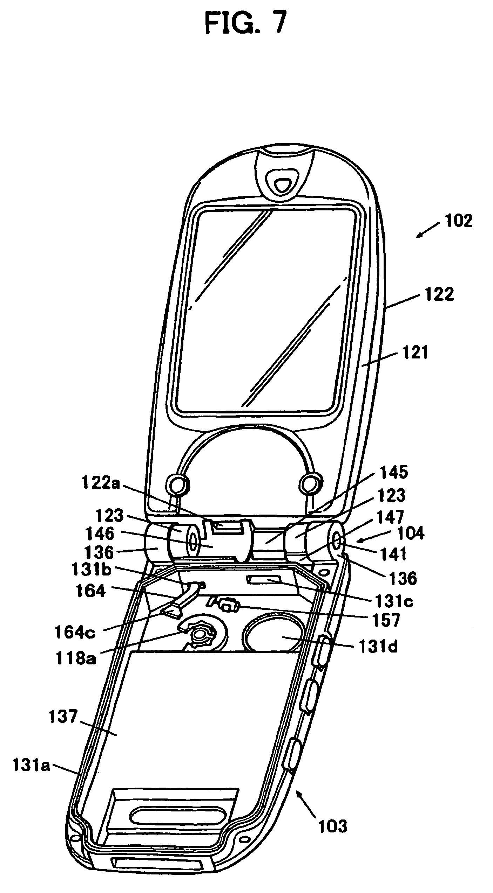

The lower housing 103 is formed by joining a front casing 132, a middle casing 131 (Refer to FIGS. 6 and 7) and a back casing 133. The front casing 132 which meets the upper housing 102 in the folded state is provided with an operation part 111, a telephone microphone 116 and a key top plate 135 constituting a part of the front casing 132. The operation part 111 comprises a direction indicator button 112 for cursor control and screen scrolling, an enter button 113, four function buttons 114 and 15 character/number input buttons 115. In this embodiment, the casings including the front casing 132 and middle casing 131 are all made of resin.

The hinge 104 is formed by pivotally coupling brackets 136, 136 provided on the middle casing 131 of the lower housing 103 to brackets 123, 123 provided on the back casing 122 of the upper housing 102 via hinge units 141, in which the outer brackets 136, 136 are covered with hinge caps 142. The space between the hinge caps 142, 142 is covered with a hinge cover 144 which is integrally formed with the key top plate 135, a hinge cover 145 (Refer to FIG.7) attached to the middle casing 131 of the lower housing 103, hinge covers 143, 143 which are integrally formed with the logo plate 105, and hinge covers 146, 147 (Refer to FIG. 7) attached to the back casing 122 of the upper housing 102.

FIG.6 is a dissembled perspective view of the folding-type mobile phone 101 in the closed state seen from the back with a rechargeable the battery pack 117 removed. A battery housing recess 138 housing the rechargeable battery pack 117 is formed in the middle casing 131 of the lower housing 103. A lock mechanism 118 which locks the rechargeable battery pack 117 in the middle casing 131 and an informing speaker 119 are also provided in the middle casing 131 of the lower housing 103.

A power connection terminal 155 provided on a circuit board 151, described later, is exposed in the battery housing recess 138 with watertight packing 156 provided around the power connection terminal 155. The back casing 133 provided with an opening 133a corresponding to the rechargeable battery pack 117, a connector cover 120 and a protective cover 134 is attached to the middle casing 131.

FIG.7 shows the opened mobile phone 101 of FIG.5 with the logo plate 105 integrally formed with the hinge covers 143, 143, key top plate 135 integrally formed with the hinge cover 114, hinge caps 142, front casing 132 of the lowerhousing 103, connector cover 120 and the internal modules which are removed. In the figure, numeral 145 refers to a hinge cover attached to the middle casing 131 of the lower housing 102. Numerals 145, 146 refer to hinge covers attached to the back casing 122 of the upper housing 102, with the hinge covers 146, 147 being integrally formed.

As shown in the figure, the board housing recess 137 is formed in the middle casing 131 of the lower housing 103 and a packing groove 131a is formed on the top surface of the sidewall of the board housing recess 137. The end wall of the board housing recess 137 on the hinge 104 side is provided with right and left holes. The left hole 131b communicates to an antenna housing recess 138 which is described later, and an antenna connection conductor 164 protrudes through the hole 131b. The right hole 131c communicates to the hinge 104 and is used to pass an FPC 125 which connects circuits in the upper body 102 and lower body 103. In the upper housing 102, the end wall of the back casing 122 on the hinge 104 side is provided with a hole 122a through which to pass the FPC 125.

A speaker mounting part 131d, an internal mechanism 118a for the lock mechanism 118 and a vibrator 157 for informing call reception are provided on the inner surface of the middle casing 131.

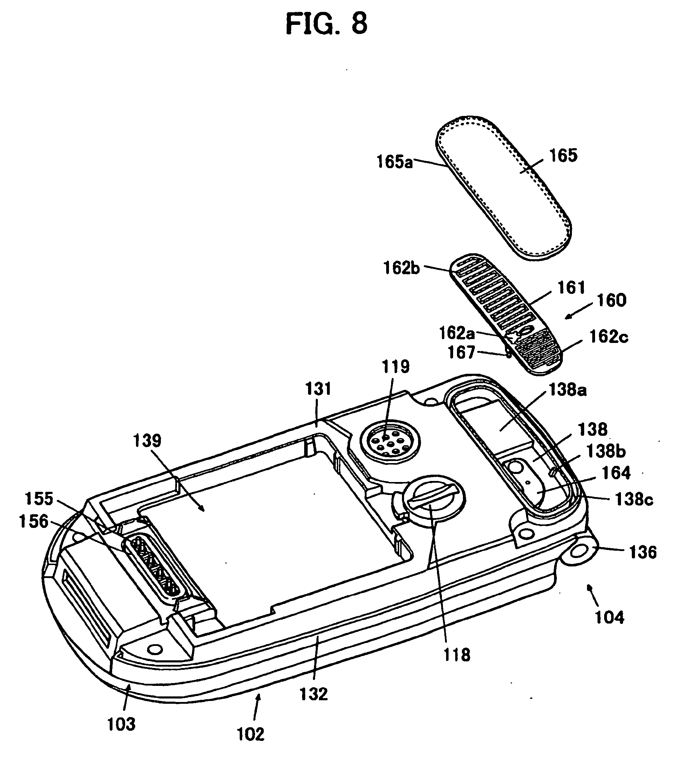

FIG.8 shows the closed mobile phone 101 of FIG.6 with the rechargeable batterypack 117, back casing 133 of the lower housing 103, hinge caps 142 and protective cover 134 removed.

As shown in the figure, the antenna housing recess 138 is formed in the middle casing 131 of the lower housing 103 along the end on the hinge 104 side behind the hinge 104 and hole 131b being open to the antenna housing recess 138. Therefore, one end of the antenna connection conductor 164 protrudes into the antenna housing recess 138.

An antenna board fixing surface 138a in one half in the transverse direction and an antenna support rib 138b in the other half is formed in the inside of the antenna housing recess 138. The antenna fixing surface 138a and antenna support rib 138b are at the same level and an antenna 160 is mounted thereon.

A packing groove 138c is formed on the top surface of the sidewall of the antenna housing recess 138 and watertight packing 165 is provided in the packing groove 138c.

The antenna 160 is a meander line patterned linear antenna on a rigid board (a hard printed board) 161 as shown in the figure. Meander line patterned copper foil antenna elements 162b, 162c are formed from a power supply electrode 162a on either side thereof on the board 161. In FIG.8, the left thicker meander line antenna element 162b is used for communication and the right thicker meander line antenna element 162c is used for GPS (Global positioning system). Both are modified monopole antennas.

The board 161 is provided with an integrated spring connector 167 which protrudes on the surface aide opposite to power supply electrode 162a.

The watertight packing 165 is provided on its circumference with a seal lip 165a corresponding to the packing groove 138c.

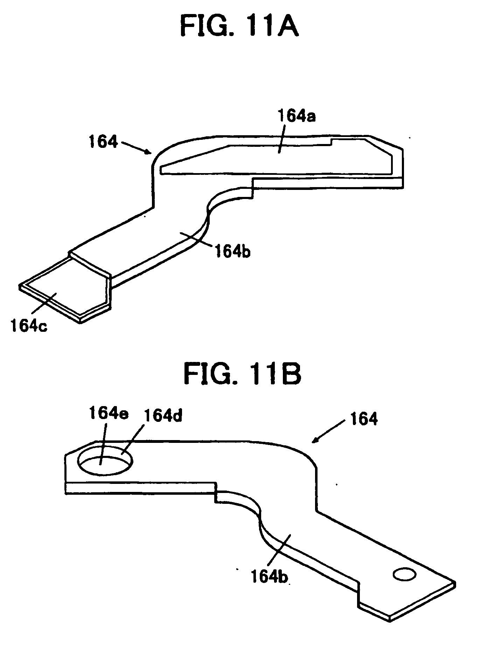

The antenna connection conductor 164 is formed by molding a resin 164b with a metal plate 164a as shown in FIGS. 11A and 11B. More specifically, the antenna connection conductor 164 is constituted as a forming component in which the metal plate 164a is inserted into the resin 164b by insert molding.

In this embodiment, the antenna connection conductor 164 has, as shown in the figure, a nearly L-shape and comprises a circuit board side connection terminal 164c at one end where the metal plate 164a is exposed (Refer to FIG.11). As shown FIG.11B, the other end of the molded resin 164b opposite the circuit board side connection terminal 164c is provided with a small hole 164d. The part of the metal plate 164 which is exposed in the small hole 164d serves as an antenna connection terminal 164e.

The installation of the antenna connection conductor 164 and antenna 160 is described hereafter.

As shown in FIG.7, the antenna connection conductor 164 is passed through the hole 131b formed in the end wall of the board housing recess 137 on the hinge 104 side. In other words, the antenna connection conductor 164 is passed through the hole 131b formed in the partition wall which compartmentalizes the board housing recess 137, and the hinge 104 and antenna housing recess 138. The half portion of the circuit board side connection terminal 164c side is located near a vibrator 157. However, the circuit board side connection terminal 164c is located away from the vibrator 157 as shown in the figure.

As shown in FIG. 8, the half portion of the antenna connection terminal 164e side is located within the antenna housing recess 138. The antenna connection terminal 164e is located near the antenna fixing surface 138a as shown in the figure.

Then, the antenna 160 is inserted into the antenna housing recess 138. The spring connector 167 is connected to the antenna side connection terminal 164e and one half of the antenna 160 is bonded to the antenna fixing surface 138a, for example, using a double-sided adhesive tape. Here, the other half of the antenna 160 is supported by the antenna support rib 41b.

Then, the seal lip 165a of the watertight packing 165 is fitted in the packing groove 138c around the antenna housing recess 138 so as to cover the antenna housing recess 138 with the watertight packing 165.

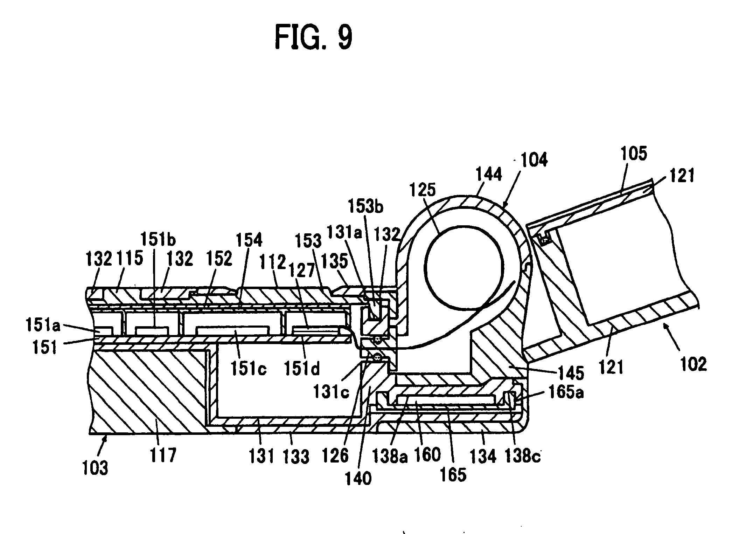

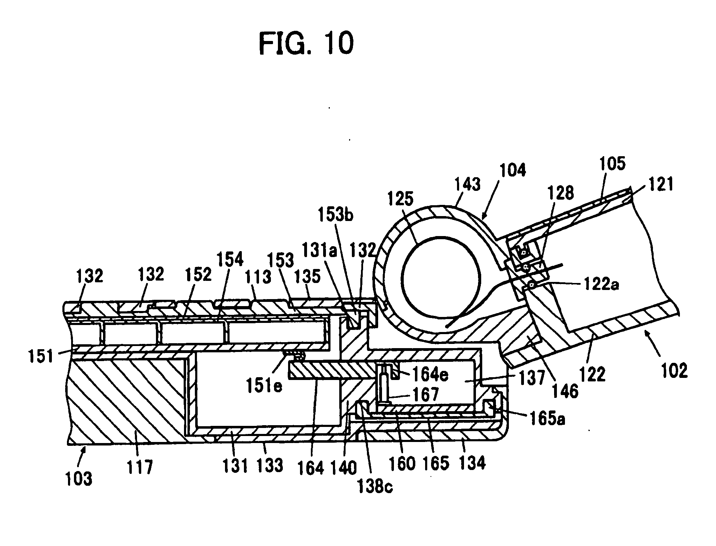

FIGS. 9 and 10 show a cross-section of the hinge 104 side. In the figures shown are a circuit board 151, electronic parts 151a, 151b and 151c, a connector 151d, a module frame (shield casing) 154, a sheet key 152, a keypad 153, a contact spring 151e, an FPC 125, a watertight cap 126, a connector 127 and a watertight cap 128. The module frame 154 is provided to reinforce and electromagnetically shield the circuit board made of metal such as a magnesium alloy.

The seal lip 153b along the circumference of the keypad 153 is fitted in the packing groove 131a formed on the sidewall of the board housing recess 137.

As shown in FIG.10, in the board housing recess 137, the circuit board side connection terminal 164c of the antenna connection conductor 164 is connected to a high frequency input/output point of a wireless circuit mounted on the circuit board 151. In other words, an antenna power supply point via the contact spring 151e.

As shown in the figure, the FPC 125 is provided in the space covered by the hinge covers 143 and 144 and the FPC 125 connects the circuit board 151 in the lower housing 103 with the circuit board in the upper housing 102.

Specifically, as shown in FIG. 9, one end of the FPC 125 emerges from the hole 131c via the watertight cap 126 and the connecter 127 provided at this end is connected to the connector 151d on the circuit board 151.

As shown in FIG.10, the other end of the FPC 125 emerges from the hole 122a via the watertight cap 128 and is connected to an un-shown circuit board in the upper housing 102.

Consequently, as shown in FIGS. 8 to 10, the antenna 160 is positioned behind the hinge 104.

The antenna on the antenna board 161, specifically the linear antenna elements 162b and 162c, is provided on the surface of the antenna board 161 away from the hinge 104 for receiving less influence from the FPA 125.

The linear antenna elements 162b and 162c on the antenna board 161 are connected to the high frequency input/output point (power supply point) of a wireless circuit part installed on the circuit board 151 via the antenna connection conductor 164 as an electric conductor.

The antenna electric current through the antenna connection conductor 164 is maximized near the power supply point.

In this embodiment, the antenna connection conductor 164 is extended along the longitudinal direction of the housing (the vertical direction while making a call) in the vicinity of the power supply point so that the antenna connection conductor 164 serves as a monopole antenna which constitutes a hybrid antenna together with the antenna 160.

Therefore, the monopole part contributes to transmission/reception of vertically-polarized wave components and the gain of vertically-polarized wave components rises.

Additionally, the antenna connection conductor 164 has, as shown in FIGS. 11A and 11B, a nearly L shape, one end of which is placed in the antenna housing recess 138 behind the hinge 104 and connected to the spring connector 167 of the antenna 160 (Refer to FIGS. 8 and 10). The other half portion side of the antenna connection conductor 164 is extended into the board housing recess 137 through the hole 131b formed in the partition 140 (the sidewall of the antenna housing recess 138) which compartmentalizes the antenna housing recess 138 and the board housing recess 137 housing the circuit board 151, etc. and connected to the contact spring 151e on the circuit board 151 (Refer to FIGS. 7 and 10). The contact spring 151e is connected to the wireless circuit part installed on the circuit board 151 and serves as a high frequency input/output point (antenna power supply point).

Accordingly, in this embodiment, the metal plate 164a of the antenna connection conductor 164, spring connector 167 and linear antennas on the antenna board 161 together constitute a quarter-wavelength antenna.

In the state where the antenna connection conductor 164 having a nearly L shape is set in the hole 131b, the connection terminal 164c side of the antenna connection conductor 164 is extended in the longitudinal direction of the lower housing 103 and the antenna connection conductor 164 functions as a monopole antenna.

Therefore, the linear antenna element 162b on the antenna board 161 does not need to be of a quarter-wavelength and the antenna board 161 can be down-sized. Then, the antenna board 161 (antenna 160) can be provided in the lower housing 103 behind the hinge 104 where it is difficult to reserve a longitudinally sufficient space.

Consequently, the lower housing 103 can be down-sized without providing projections on either side of the hinge.

The reduction in gain of vertically-polarized wave components as a result of down-sizing the antenna board 161 (antenna 160) having the linear antenna element 162b as a built-in antenna can be compensated for by the antenna connection conductor 164 constituting a hybrid antenna together with the down-sized antenna 160. The gain of vertically-polarized wave components can be increased.

By the way, the electrical length of the linear antenna part (communication linear antenna part) on the antenna board 161 and the antenna connection conductor 164 is desirably an eighth of the communication band wavelength. However, nearly an eighth is acceptable for sufficient function. For example, the monopole antenna part achieves excellent transmission/reception of vertically-polarized wave components even if it is provided with an electrical length smaller than an eighth but nearly an eighth of the communication band wavelength. Then, the gain of vertically-polarized wave components is increased.

In this embodiment, as shown in FIG.7, the vibrator 157 is provided near the antenna connection conductor 164. However, the antenna connection conductor 164 is turned away from the vibrator. Therefore, the influence of the vibrator 157 on the antenna connection conductor 164 is minimized.

Although not illustrated, the metal plate 164a part of the antenna connection conductor 164 which connects the antenna connection terminal 164e part and the circuit board connection terminal, namely the metal plate 164a part extended in the longitudinal direction of the lower housing 103, is molded at the furthermost point form the vibrator 157.

As shown in FIG.8, one half portion side of the antenna connection conductor 164 in the antenna housing recess 138 behind the hinge 104 is positioned near the partition side which compartmentalizes the antenna housing recess 138 and the board housing recess 137 while receiving little influence from the FPC 125.

As described above, in this embodiment, the metal module frame 154 is housed in the board housing recess 137. The board housing recess 137 housing the circuit board 151 and the antenna housing recess 138 housing the antenna 160 are separately formed in the resin middle casing 131. The antenna housing recess 138 is covered with the resin back casing 133 and resin protective cover 134. Therefore, the antenna receives very little influence from the metal used in the module frame 154 during transmission/reception of radio waves thereby realizing excellent communication.

Furthermore, the antenna connection conductor 164 connecting the antenna 160 and the circuit board 151 serves as a monopole antenna and increases the gain of vertically-polarized wave components which allows for down-sizing of the antenna 160 housed in the antenna housing recess 138. A similar effect can be obtained by an antenna connection conductor made of a metal plate or a metal wire without resin molding in place of the structure of the embodiment.

The edge of the keypad 153 also serving as watertight packing is inserted between the middle casing 131 and front casing 132 and the edge of the watertight packing 165 is inserted between the middle casing 131 and back casing 133, thereby improving watertight properties.

The present invention is not restricted to the above embodiments and various modifications and changes can be made without departing from the scope of the present invention.

For example, in the above-mentioned first and second embodiments, the upper housing contains the telephone speaker and display and the lower housing contains the telephone microphone and operation part. However, embodiments in which the upper housing contains the telephone speaker and the lower housing contains the telephone microphone or the upper housing contains the display and the lower housing contains the operation part can be provided.

Furthermore, in the above-mentioned first and second embodiments, the hinge cover and front casing are separate pieces. However, they can be integrally formed. Similarly, the back casing and protective cover can be integrally formed.

Further, in the above-mentioned first and second embodiments, the present invention is applied to a folding-type mobile phone. However, the present invention can be applied to any mobile wireless device which is provided with a built-in antenna and performs transmission and/or reception using the antenna, such as laptop computers, wave clocks, pager, and PDAs (personal digital assistances). These devices are not necessarily of a folding-type.

While the present invention has been described with reference to the preferred embodiments, it is our intention that the invention be not limited by any of the details of description thereof.

As this invention may be embodied in several forms without departing from the essential characteristics thereof, the present embodiments are therefore illustrative and not restrictive since the scope of the invention is defined by the appended claims rather than by the description preceding them.

## Claims

1. A mobile wireless device having a built-in antenna in a housing comprising:
a first housing part (3, 103) having a first resin casing (31, 131) in which a first housing recess (37, 137), which houses a circuit board (51, 151), and a second housing recess (38, 138), which houses the antenna (60, 160) are formed;
the first housing recess being covered with a second resin or metal casing (32, 132) with the circuit board housed therein; and
the second housing recess being covered with a third resin casing (33, 133) with the antenna housed therein,
**characterized in that**
the first and second housing recesses are adjacent to each other when viewed from the front of the mobile wireless device, being compartmentalized by a partition (40, 140).

2. The mobile wireless device as claimed in claim 1, wherein
the mobile wireless device is a folding-type mobile wireless device in which a second housing part (2, 102) having a telephone speaker (7,107) and/or a display (6, 106) and the first housing part (3, 103) having a telephone microphone (16, 116) and/or an operation part (11, 111) are pivotally coupled via a hinge (4, 104), whereby the first and second housing parts can be folded at the hinge;
the first casing is the main casing of the first housing part;
the first housing recess is formed on the surface side which goes inside when the first and second housing parts are folded; and
the second housing recess is formed on the surface side which goes outside.

3. The mobile wireless device according to claim 2, wherein the second housing recess is located directly behind the hinge.

4. The mobile wireless device according to any of claims 1 to 3, wherein the partition (40, 140) is provided with a through-hole (40a, 131b) which connects the first and second housing recesses; and
the antenna and circuit board are electrically connected via a connection conductor (64, 164) provided through the through-hole.

5. The mobile wireless device according to any of claims 1 to 4, wherein a first watertight member (53, 153), which is adapted to prevent water from entering the first housing recess, is provided between the first housing recess and the second casing.

6. The mobile wireless device according to claim 5, wherein the first watertight member is a rubber keypad sheet mounted on the circuit board via a sheet key (52, 152) and having multiple key operation buttons on the top surface.

7. The mobile wireless device according to any of claims 1 to 6, wherein a second watertight member (65, 165), which is adapted to prevent water from entering the second housing recess, is provided between the second housing recess and the third casing.

8. The mobile wireless device according to any of claims 1 to 7, wherein the second casing is a metal casing.

## Patentansprüche

1. Mobile Drahtlosvorrichtung, die eine eingebaute Antenne in einem Gehäuse aufweist, wobei sie umfasst:
einen ersten Gehäuseteil (3, 103), der eine erste Kunststoffverkleidung (31, 131) aufweist, in der eine erste Gehäusevertiefung (37, 137), die eine Leiterplatte (51, 151) aufnimmt, und eine zweite Gehäusevertiefung (38, 138), die die Antenne (60, 160) aufnimmt, ausgebildet sind;
wobei die erste Gehäusevertiefung mit einer zweiten Kunststoff- oder Metallverkleidung (32, 132) abgedeckt ist und die Leiterplatte darin aufgenommen ist; und
die zweite Gehäusevertiefung mit einer dritten Kunststoffverkleidung (33, 133) abgedeckt ist und die Antenne darin aufgenommen ist,
**dadurch gekennzeichnet, dass**
die erste und die zweite Gehäusevertiefung, von der Vorderseite der mobilen Drahtlosvorrichtung her gesehen, aneinandergrenzen und durch eine Trennwand (40, 140) abgetrennt sind.

2. Mobile Drahtlosvorrichtung nach Anspruch 1, wobei
die mobile Drahtlosvorrichtung eine mobile Drahtlosvorrichtung vom Klapp-Typ ist, bei dem ein zweiter Gehäuseteil (2, 102), der einen Telefon-Lautsprecher (7, 107) und/oder eine Anzeigeeinrichtung (6, 106) aufweist, und der erste Gehäuseteil (3, 103), der ein Telefon-Mikrofon (15, 116) und/oder einen Betätigungsteil (11, 111) aufweist, über ein Scharnier (4, 104) schwenkbar gekoppelt sind, so dass der erste und der zweite Gehäuseteil an dem Scharnier zusammengeklappt werden können;
die erste Verkleidung die Hauptverkleidung des ersten Gehäuseteils ist;
die erste Gehäusevertiefung an der Flächenseite ausgebildet ist, die innen liegt, wenn der erste und der zweite Gehäuseteil zusammengeklappt sind; und
die zweite Gehäusevertiefung an der Flächenseite ausgebildet ist, die außen liegt.

3. Mobile Drahtlosvorrichtung nach Anspruch 2, wobei sich die zweite Gehäusevertiefung direkt hinter dem Scharnier befindet.

4. Mobile Drahtlosvorrichtung nach einem der Ansprüche 1 bis 3, wobei die Trennwand (40, 140) mit einem Durchgangsloch (40a, 131b) versehen ist, das die erste und die zweite Gehäusevertiefung verbindet; und
die Antenne und die Leiterplatte über einen Verbindungsleiter (64, 164), der in dem Durchgangsloch vorhanden ist, elektrisch verbunden sind.

5. Mobile Drahtlosvorrichtung nach einem der Ansprüche 1 bis 4, wobei ein erstes wasserdichtes Element (53, 153), das so eingerichtet ist, dass es verhindert, dass Wasser in die erste Gehäusevertiefung eindringt, zwischen der ersten Gehäusevertiefung und der zweiten Verkleidung vorhanden ist.

6. Mobile Drahtlosvorrichtung nach Anspruch 5, wobei das erste wasserdichte Element ein Gummi-Tastaturfolie ist, die über eine Folientaste (52, 152) an der Leiterplatte angebracht ist und mehrere Tasten-Bedienknöpfe an der Oberseite aufweist.

7. Mobile Drahtlosvorrichtung nach einem der Ansprüche 1 bis 6, wobei ein zweites wasserdichtes Element (65, 165), das so eingerichtet ist, dass es verhindert, dass Wasser in die zweite Gehäusevertiefung eindringt, zwischen der zweiten Gehäusevertiefung und der dritten Verkleidung vorhanden ist.

8. Mobile Drahtlosvorrichtung nach einem der Ansprüche 1 bis 7, wobei die zweite Verkleidung eine Metallverkleidung ist.

## Revendications

1. Dispositif sans fil mobile comportant une antenne intégrée dans un logement comprenant :
une première partie de logement (3, 103) possédant un premier boîtier en résine (31, 131) dans lequel sont formés un premier évidement de logement (37, 137), qui loge une carte de circuit imprimé (51, 151), et un second évidement de logement (38, 138), qui loge l'antenne (60, 160) ;
le premier évidement de logement étant recouvert d'un deuxième boîtier en résine ou en métal (32, 132) dans lequel est logée la carte de circuit imprimé ; et
le second évidement de logement étant recouvert d'un troisième boîtier en résine (33, 133) dans lequel est logée l'antenne,
**caractérisé en ce que**
les premier et second évidements de logement sont adjacents l'un à l'autre lorsqu'ils sont vus depuis l'avant du dispositif sans fil mobile, étant compartimentés par une cloison (40, 140).

2. Dispositif sans fil mobile selon la revendication 1, dans lequel
le dispositif sans fil mobile est un dispositif sans fil mobile de type pliable dans lequel une seconde partie de logement (2, 102) comportant un haut-parleur de téléphone (7, 107) et/ou un écran d'affichage (6, 106) et la première partie de logement (3, 103) comportant un microphone de téléphone (16, 116) et/ou une partie d'actionnement (11, 111) sont accouplées de façon pivotante par l'intermédiaire d'une charnière (4, 104), moyennant quoi les première et seconde parties de logement peuvent être pliées au niveau de la charnière ;
le premier boîtier est le boîtier principal de la première partie de logement ;
le premier évidement de logement est formé sur le côté de surface qui rentre lorsque les première et seconde parties de logement sont pliées ; et
le second évidement de logement est formé sur le côté de surface qui sort.

3. Dispositif sans fil mobile selon la revendication 2, dans lequel le second évidement de logement se situe directement derrière la charnière.

4. Dispositif sans fil mobile selon l'une quelconque des revendications 1 à 3, dans lequel la cloison (40, 140) est pourvue d'un trou traversant (40a, 131b) qui relie les premier et second évidements de logement ; et
l'antenne et la carte de circuit imprimé sont électriquement reliées par l'intermédiaire d'un conducteur de liaison (64, 164) situé dans le trou traversant.

5. Dispositif sans fil mobile selon l'une quelconque des revendications 1 à 4, dans lequel un premier élément étanche à l'eau (53, 153), qui est conçu pour empêcher l'eau d'entrer dans le premier évidement de logement, se situe entre le premier évidement de logement et le deuxième boîtier.

6. Dispositif sans fil mobile selon la revendication 5, dans lequel le premier élément étanche à l'eau est une feuille de clavier en caoutchouc montée sur la carte de circuit imprimé par l'intermédiaire d'une feuille (52, 152) et comportant de multiples boutons d'actionnement de touche sur la surface supérieure.

7. Dispositif sans fil mobile selon l'une quelconque des revendications 1 à 6, dans lequel un second élément étanche à l'eau (65, 165), qui est conçu pour empêcher l'eau d'entrer dans le second évidement de logement, se situe entre le second évidement de logement et le troisième boîtier.

8. Dispositif sans fil mobile selon l'une quelconque des revendications 1 à 7, dans lequel le deuxième boîtier est un boîtier en métal.
